# EUROPEAN PATENT APPLICATION

(11) **EP 4 576 809 A1**
(43) Date of publication of application: **25.06.2025**
(21) Application number: 23218269.1
(22) Date of filing: 19.12.2023
(51) Int. Cl.: H04Q 11/00

(54) **METHOD AND APPARATUS FOR REDUCING POWER CONSUMPTION IN PON MAC**

(71) Applicant: Nokia Solutions and Networks Oy, 02610 Espoo (FI)
(72) Inventor: Perez Blanco, Ricardo, Antwerp (BE)
(74) Representative: Zinsinger, Norbert

(57) **Abstract**

The present invention discloses an apparatus for use in a transmitter in a passive optical network, PON, comprising means for: generating a first bitstream (211, 311) in a predetermined frame size (221, 321), wherein the first bitstream (211, 311) comprises service data units, SDUs, (231P, 331P) intended for a recipient in the PON and a number of idle data units (231i, 331i); and wherein, the number of idle data units is smaller than another number of idle data units used to fill a Framing Sublayer, FS, payload section space; generating a second bitstream (214, 313) by processing the first bitstream (211, 311) through at least part of a plurality of processing stages (202, 203, 204; 302, 303, 304) used for transmission preparation, till after a predefined processing stage (204, 303); determining an appendix data (250, 350) based on constrains of said at least part (202, 203, 204; 302, 303) of the plurality of processing stages; obtaining a third bitstream (215, 315) in a PON Physical, PHY, layer size (225, 325) based on the second bitstream (214, 313) and the appendix data (250, 350), and transmitting the third bitstream (215, 315) via the PON.

## Description

### Field of the invention

Various example embodiments relate to passive optical network (PON), specifically to transmitter in a PON.

### Background

PON (Passive Optical Networks) standards were originally designed around resilience and capacity. Power efficiency criteria, although sometimes considered, were not high priority.

Latest International Telecommunication Union (ITU) PON standards or Multi-Source Agreement (MSA) standards (25GS-PON) define a downstream and upstream frame structures that drives to non-power efficient PON MAC hardware implementations.

In downstream, all the standards define a fixed length for a frame at the physical layer (PHY frame 125 µs). In case no traffic has to be sent, they require special xGPON Encapsulation Method (XGEM) frames (idle XGEM) to be created. According to the requirement of the current standards, the PON MAC at the Optical Line Terminal (OLT) inserts in such circumstance idle XGEMs in the beginning of its downstream pipeline, and the pipeline processing continues as if the XGEM payload was actual traffic.

In upstream, the 125 µs frame is divided into upstream bursts, each one having a different length. The length is assigned by the OLT, and in many situations, it is longer than needed, leading to the ONU to generate idle XGEM frames. Similar as the downstream transmission as indicated above, for upstream, the PON MAC at the Optical Network Unit (ONU) inserts in such circumstance idle XGEMs in the beginning of its upstream pipeline, and the pipeline processing continues as if the XGEM payload was actual traffic.

In terms of power consumption, a PON MAC in the OLT will consume a constant amount of power independently of the amount of traffic that is sent downstream, and a PON MAC in the ONU will consume a constant amount of power for a given upstream allocation independently of the traffic that is sent upstream.

There is thus a need for an improved apparatus and method to reduce the power consumption in PON MAC.

### Summary of the Invention

According to a first aspect of the invention, there is provided an apparatus comprising means for: generating a first bitstream in a predetermined frame size, wherein the first bitstream comprises service data units, SDUs, intended for a recipient in the PON and a number of idle data units; and wherein, the number of idle data units is smaller than another number of idle data units used to fill a Framing Sublayer, FS, payload section space; generating a second bitstream by processing the first bitstream through at least part of a plurality of processing stages used for transmission preparation, till after a predefined processing stage; determining an appendix data based on constrains of said at least part of the plurality of processing stages; obtaining a third bitstream in a PON Physical, PHY, layer size based on the second bitstream and the appendix data, and transmitting the third bitstream via the PON.

According to a second aspect of the invention, there is provided a method comprising: generating a first bitstream in a predetermined frame size, wherein the first bitstream comprises service data units, SDUs, intended for a recipient in the PON and a number of idle data units; and wherein, the number of idle data units is smaller than another number of idle data units used to fill a Framing Sublayer, FS, payload section space; generating a second bitstream by processing the first bitstream through at least part of a plurality of processing stages used for transmission preparation, till after a predefined processing stage; determining an appendix data based on constrains of said at least part of the plurality of processing stages; obtaining a third bitstream in a PON Physical, PHY, layer size based on the second bitstream and the appendix data, and transmitting the third bitstream via the PON.

According to a third aspect of the invention, there is provided a computer program comprising instructions for causing an apparatus to perform at least the following: generating a first bitstream in a predetermined frame size, wherein the first bitstream comprises service data units, SDUs, intended for a recipient in the PON and a number of idle data units; and wherein, the number of idle data units is smaller than another number of idle data units used to fill a Framing Sublayer, FS, payload section space; generating a second bitstream by processing the first bitstream through at least part of a plurality of processing stages used for transmission preparation, till after a predefined processing stage; determining an appendix data based on constrains of said at least part of the plurality of processing stages; obtaining a third bitstream in a PON Physical, PHY, layer size based on the second bitstream and the appendix data, and transmitting the third bitstream via the PON.

According to a fourth aspect of the invention, there is provided an apparatus comprising at least one processor and at least one memory including computer program code, the at least one memory and the computer program code configured to with the at least one processor, cause the apparatus at least to perform: generating a first bitstream in a predetermined frame size, wherein the first bitstream comprises service data units, SDUs, intended for a recipient in the PON and a number of idle data units; and wherein, the number of idle data units is smaller than another number of idle data units used to fill a Framing Sublayer, FS, payload section space; generating a second bitstream by processing the first bitstream through at least part of a plurality of processing stages used for transmission preparation, till after a predefined processing stage; determining an appendix data based on constrains of said at least part of the plurality of processing stages; obtaining a third bitstream in a PON Physical, PHY, layer size based on the second bitstream and the appendix data, and transmitting the third bitstream via the PON.

According to a fifth aspect of the invention, there is provided a non-transitory computer readable medium comprising program instructions for causing an apparatus to perform at least the following: generating a first bitstream in a predetermined frame size, wherein the first bitstream comprises service data units, SDUs, intended for a recipient in the PON and a number of idle data units; and wherein, the number of idle data units is smaller than another number of idle data units used to fill a Framing Sublayer, FS, payload section space; generating a second bitstream by processing the first bitstream through at least part of a plurality of processing stages used for transmission preparation, till after a predefined processing stage; determining an appendix data based on constrains of said at least part of the plurality of processing stages; obtaining a third bitstream in a PON Physical, PHY, layer size based on the second bitstream and the appendix data, and transmitting the third bitstream via the PON.

According to a sixth aspect of the invention, there is provided a computer readable medium comprising program instructions for causing an apparatus to perform at least the following: generating a first bitstream in a predetermined frame size, wherein the first bitstream comprises service data units, SDUs, intended for a recipient in the PON and a number of idle data units; and wherein, the number of idle data units is smaller than another number of idle data units used to fill a Framing Sublayer, FS, payload section space; generating a second bitstream by processing the first bitstream through at least part of a plurality of processing stages used for transmission preparation, till after a predefined processing stage; determining an appendix data based on constrains of said at least part of the plurality of processing stages; obtaining a third bitstream in a PON Physical, PHY, layer size based on the second bitstream and the appendix data, and transmitting the third bitstream via the PON.

According to the example embodiments, less idle data units are generated, the power consumption caused by the idle data units going through the processing stages in PON MAC is reduced. Before transmission, the appendix data is determined and used to obtain a frame size suitable for transmission in a PON, so as to be compliant with the standard. Thereby, dynamic power consumption in PON MAC is reduced while keeping compliant with the standard. The result is achieved without significantly amending the structure as defined in the standard.

### Brief description of the figures

For a more complete understanding of example embodiments of the present invention, reference is now made to the following descriptions taken in connection with the accompanying drawings in which:
Figure 1 shows a schematic diagram of a plurality of processing stages used for transmission preparation according to state of the art;
Figure 2 shows a downstream frame structure according to the standard ITU G.9804.2 (HS-PON);
Figure 3 shows a comparison about the length of the bitstreams after each processing stage between the state of the art and various embodiments;
Figure 4 shows schematic diagram indicating the relationship of power consumption and the length of a frame;
Figure 5 shows a block diagram of an apparatus 200 according to one example embodiment;
Figure 6 shows a block diagram of an apparatus 300 according to another example embodiment;
Figure 7 shows an example method 700 incorporating aspects of the example embodiments.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

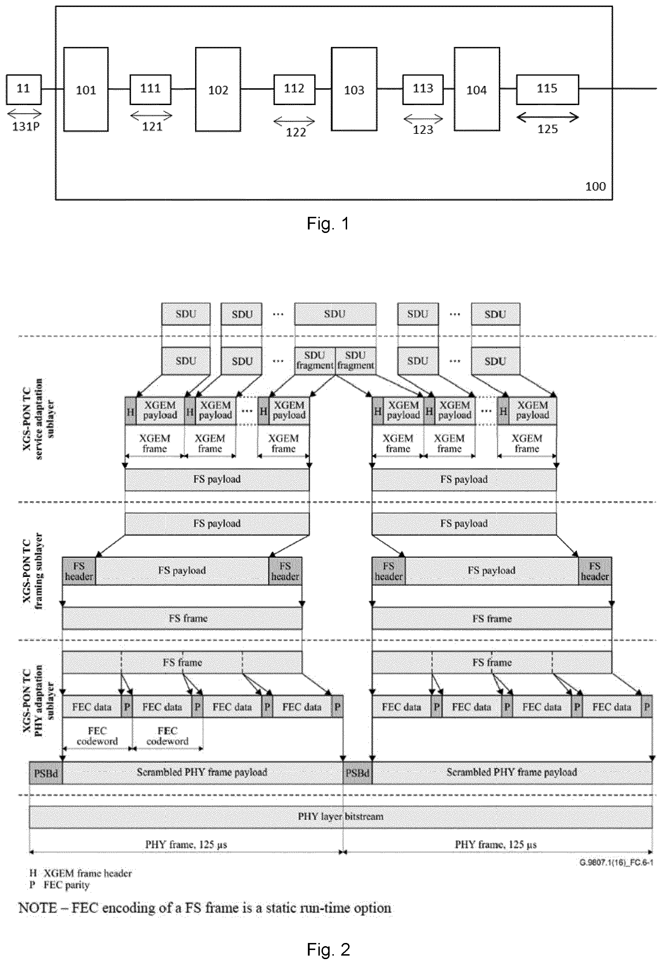

Figure 1 shows a schematic diagram of a plurality of processing stages used for transmission preparation according to state of the art.

As shown in Figure 1, PON MAC layer comprises processing stages 101, 102, 103 and 104 used for transmission preparation. The blocks 11, 111, 112, 113, 114, and 115 represent bitstreams input to or output from the respective adjacent function block. Reference signs 131P, 121, 122, 123 and 225 indicate the length of respective bitstream.

In Figure 1, service data units (SDUs) 11 go through the processing stages 101, 102, 103 and 104 sequentially before they are streamed out to the Optical Distribution Network (ODN). For simplicity, four processing stages are shown in Figure 1. A skilled person shall understand, there may be more or less processing stages, depending on the functions of respective processing stage. In Figure 1, each processing stage is responsible for handling certain aspects of the encapsulation process as defined in the standard. For example, the first processing stage 101 is related to the top layers of the protocol stack, and following processing stages take care of aspects related to lower layers.

Specifically, according to the current standard, the function of respective processing stage may comprise: fragmenting, introducing multiple headers, such as Framing Sublayer (FS) header, calculating parity bits, performing scrambling, etc.

The processing stages shown in Figure 1 may correspond to the downstream pipeline on the OLT or the upstream pipeline on the ONU. In the following, the functions of the plurality of processing stages will be elaborated with respect to the downstream transmission.

Figure 2 shows a downstream frame structure according to the standard ITU G.9804.2 (HS-PON).

In one example, processing stage 101 may comprise functions of the service adaption sublayer as shown in Figure 2, such as fragmenting SDUs 11 in to SDU fragments, adding xGPON Encapsulation Method (XGEM) frame header, adding padding units, and generating Idle XGEMs frames to fill the available FS payload section space, etc.

Processing stage 102 may comprise functions of the framing sublayer as shown in Figure 2, such as adding FS header, etc. Processing stage 103 may comprise part of the functions of the PHY adaption sublayer, such as performing Forward Error correction (FEC) encoding, adding Physical Synchronization block (PSBd) header, etc. Stage 104 may comprise the remaining functions of the PHY adaption sublayer, such as scrambling and bit interleaving.

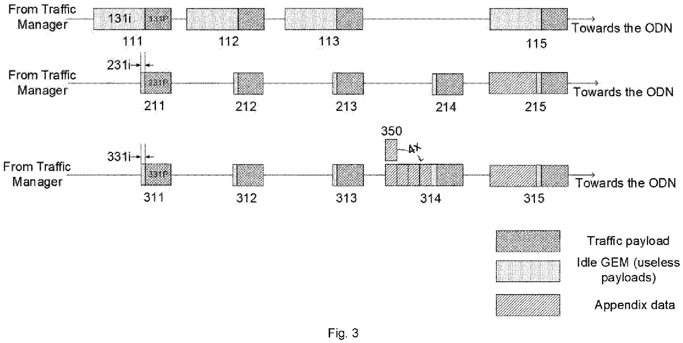

Figure 3 shows a comparison about the length of the bitstreams after each processing stage between the state of the art and various embodiments.

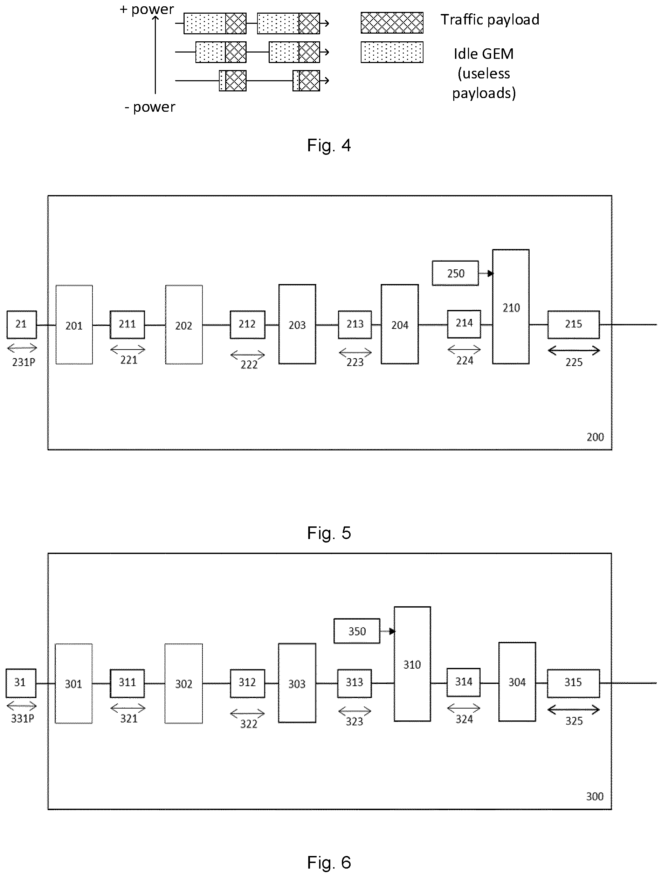

In Figure 3, the blocks with grid pattern represent traffic payload, blocks with dotted pattern represent idle data units, and blocks with diagonal stripes represent appendix data which will be explained later with respect to various embodiments. The first line in Figure 3 corresponds to the requirement in the current standard. The other two lines will be described later together with Figures 5 and 6.

As can be seen from Figure 3, traditionally, all stages of the PON MAC works with a known physical layer frame size, for example bitstream 115 has the length of 125µs for a downstream frame (or the length of burst for upstream transmission allocated by OLT). Considering the functions of each processing stages as described above with respect to Figures 1 and 2, the length 121 of the bitstream 111 may correspond to the fixed length of FS payload as defined in the standard.

The first processing stage 101 will pull as much traffic packets 131P as it can, for example, from the traffic manager, and in case they are not enough to fill the available FS payload section, the processing stage 101 will fill the available FS payload sectionwith idle XGEM packets 131i. The rest of the stages will process the whole frame without making any difference whether the actual content is traffic packets or worthless idle xGEMs. The bitstream 111 with fixed length 121 of FS payload going through the processing stages 102, 103, and 104 would result in the bitstream 115 having length of PON PHY frame size as defined in standard.

PON MAC power consumption comprises static power consumption and dynamic power consumption. Static power consumption is the power consumed by a certain integrated circuit due to current leakage. Dynamic power consumption is the power consumed by a certain integrated circuit due to signal toggling, thus, correlated to logic activity.

Figure 4 shows a schematic diagram indicating the relationship of power consumption of a processing stage and the length of its input bitstream.

It can be seen from Figure 4, for the same traffic payload, the power consumption decreases, if the length of idle GEM is reduced.

Various embodiments aim to reduce the dynamic power consumption in PON MAC.

Figure 5 shows a block diagram of an apparatus 200 according to one example embodiment.

Various embodiments are applicable to various PON standard, for example, High Speed Passive Optical Network (HS-PON), Gigabit PON (GPON), Ten Gigabit PON (XG-PON), Ten Gigabit Symmetric PON (XGS-PON), 25Gigabits Symmetric PON (25GS-PON ) etc.. As technology advances, various embodiments may also be applicable to possible PON standard developed in the future.

The apparatus 200 is suitable for use in a transmitter in a PON, for example in a transmitter at OLT side and/or in a transmitter at ONU side. In the following, embodiments will be further elaborated with respect to downstream implementation.

As shown in Figure 5, the apparatus 200 comprises function blocks 201, 202, 203, 204 and 210. The apparatus 200 may be comprise hardware or software carrying out the functions of respective function blocks. The blocks 231, 211, 212, 213, 214, and 215 represent bitstreams input to or output from the respective adjacent function block. Reference signs 221, 222, 223, 224 and 225 indicate the length of respective bitstream.

Function block 201 is configured to generate a first bitstream 211 in a predetermined frame size 221, wherein the first bitstream 211 comprises SDUs 231P intended for a recipient in the PON and a number of idle data units 231i; and wherein, the number of idle data units 231i is smaller than another number of idle data units used to fill a Framing Sublayer, FS, payload section space.

Specifically, the apparatus 200 may receive SDUs 21 intended for one or more ONUs for example from a traffic manager. The received SDUs 21 may be stored in a buffer (not shown) in the apparatus 200. In another embodiment, the buffer may also be implemented outside the apparatus 200.

Function block 201 extracts SDUs with length of 231P from the received SDUs 21. The length 231P may be determined for example based on the number of available SDUs or the length of the predetermined frame size 221.

Function block 201 may further fragment the SDUs 231P and generates XGEM frames, for example by adding XGEM frame headers to the SDU fragments. When necessary, the function block 201 may also add padding data units to the SDU fragments to fill a full XGEM frame.

Function block 201 may be further configured to generate a number of idle XGEM frames 231i, so that the second bitstream 211 generated by the function block 201 has the length of the predetermined frame size 221. The idle XGEM may comprise idle data units as payload instead of SDUs. The predetermined frame size 221 may be determined by software or hardware, inside or outside the apparatus 200. The predetermined frame size 221 may be determined in various ways, for example, it may be determined based on: historical traffic rate values, instantaneous traffic rate, moving average traffic rate, or an operator configuration, e.g. based on QoS requirement of a user.

Reference is also made to Figure 3. Specifically, as shown in the first two lines of Figure 3, when the length of SDUs 231P is same as the length of SDUs 131P, the number of idle XGEM frames 231i generated by the function block 201 in Figure 5 is smaller than that 131i generated in the processing stage 101 in Figure 1 to fill a FS payload section space.

In this example, the function block 201 is configured to perform similar functions as described with respect to the processing stage 101 in Figure 1, such as fragmenting SDUs, adding XGEM frame header, and adding idle XGEM frames, etc. The difference between the function block 201 and the processing stage 101 lies in that the first bitstream 211 has shorter length than the FS payload as defined in the standard. While the bitstream 111 output from the processing stage 101 in Figure 1 has the length of FS payload as defined in the standard.

GEM subsystem is typically one of the first subsystems for the data to traverse, see also Figure 2. By reducing the frame size, the PON MAC organically creates smaller chunks of data, that are later processed by other logic of the GEM subsystem and other subsystems.

In another example, the first bitstream 211 may just comprise SDUs 231P and a number of idle data units 231i. In this case, a further processing stage (for example the processing stage 202) may be configured to perform: segmenting the first bitstream 211, adding XGEM frame header to the segments, etc. to result in a shorter FS payload having a length shorter than that defined in the standard. In this case, the number of idle data units may be determined such that no padding or further idle XGEM frame needs to be generated.

Referring back to Figure 5, generally, by processing the first bitstream 211 through at least part of a plurality of processing stages 202, 203, and 204 used for transmission preparation, till after a predefined processing stage 204, a second bitstream 214 is generated.

In one example, the processing stages 202, 203, 204 may have the same functions as described with respect to processing stages 102, 103 and 104. A skilled person shall understand that the functions of each processing stages is not limited to the given example. In other embodiments, more or less processing stages may be configured to perform the functions of preparing service data units ready for transmission.

The apparatus 200 further comprises means for determining an appendix data 250, based on constrains of said at least part 202, 203, 204 of the plurality of processing stages.

The appendix data 250 may be determined by in various ways. In an example, the appendix data 250 may be determined by looking up table. In such a table, for example, for each remaining length of the bitstream (difference between length 225 of the third bitsream 215 and length 224 of the second bitstream 214), there is a corresponding appendix data fulfilling the constrains of the preceding processing stages 202, 203, 204 up to the predefined processing stage 204. Specifically, constrains of respective processing stage may be interpreted based on the definition in the standard. For example, it may comprise certain requirement of the length of input bitstreams of each processing stages.

In one embodiment, the appendix data 250 may be determined by processing a predetermined number of idle data units through said at least part 202, 203, 204 of the plurality of processing stages. The number of idle data units may be determined based on a target length of the appendix data 250.

Generally, the target length of the appendix data 250 may be determined based on the predefined processing stage 204. For example, if the predefined processing stage is FEC encoding, as will be further explained below with respect to Figure 6, the target length of the appendix data 350 may be an integer times of a length of a FEC codeword.

The appendix data 250 may be determined only once and then stored for example in a memory and used for one or more frames. A skilled person shall understand that repeatedly using same appendix data for more than one frame would save more power consumption.

The function block 210 is configured to obtain a third bitstream 215 in a PON Physical, PHY, layer size 225 based on the second bitstream 214 and the appendix data 250. For downstream implementation, the PON PHY layer size 225 is a PON PHY frame size, for example 125 µs according to definition in current standard. For upstream implementation, the PON PHY layer size 225 may be a PON PHY burst size, as allocated by the OLT to the ONU.

In the embodiment shown in Figure 5, the predefined processing stage 204 is the latest stage among the plurality of processing stages 202, 203, 204 used for transmission preparation. Function block 210 is configured to obtain the third bitstream 215 by appending the appendix data 250 to the second bitstream 214. For example, the appendix data 250 may be appended to the end of the second bitstream 214. The position of the appendix data 250 in the third bitstream 215 is not limited to the given example. For example, the appendix data 250 may also be appended to the beginning of the second bitstream 214.

The apparatus 200 further comprises means for transmitting the third bitstream 215 via the PON.

Figure 6 shows a block diagram of an apparatus 300 according to another example embodiment.

For simplicity, the blocks in Figure 6 with similar reference signs and similar meaning/functions as those described with respect to Figure 5 will not be repeated here.

In the embodiment shown in Figure 6, a second bitstream 313 is generated by processing the first bitstream 311 through part 302, 303 of the plurality of processing stages 302, 303, 304 used for transmission preparation, till after a predefined processing stage 303.

In this embodiment, the predefined processing stage 303 is before the latest stage 304 among the plurality of processing stages 302, 303, 304, and the function block 310 is configured to obtain an intermediate bitstream 314 by appending the appendix data 350 an integer number times to the second bitstream 313; and to obtain the third bitstream 315 in a PON PHY layer size 325 by processing the intermediate bitstream 314 through the remaining stage 304 of the plurality of processing stages 302, 303, 304.

Referring the third line in Figure 3, it the appendix data 350 is repeated 4 times in the intermediate bitstream 314. In another embodiment, the integer number may be any other number. Generally, if the integer number is not smaller than 2, memory required for storing the appendix data is reduced. Meanwhile, more power consumption can be saved by repeating the appendix data 350 for example at the end of the second bitstream 313.

In one embodiment, the predefined processing stage 303 maybe FEC encoding. The length of the appendix data 250, 350 is another integer times of a length of a FEC codeword. For example, the length of the appendix data 350 may be same as the length of one FEC codeword defined as 14592+2688= 17280bits in PON standard.

The predetermined frame size 321 may be determined according to the length of the appendix data. For example, considering the appendix data 350 is added to the second bitstream 313 after PSBD header is added (cf Fig. 2), the predetermined frame size 321 may be determined such that the size difference between the second bitstream 313 and the PON PHY layer size 325 can be filled with an integer number n times of the appendix data 350, for example, n times FEC codewords. In another example, the appendix data may also be added before PSBD header is added to the frame. In other words, the predetermined frame size 321 may be determined such that processing the intermediate bitstream 314 comprising the second bitstream 313 and the integer number n times of the appendix data 350 through the remaining stage 304 of the plurality of processing stages 302, 303, 304 would result in a third bitstream 315 in a PON PHY layer size 325.

In one embodiment, the apparatus 200, 300 may be further configured to obtain a first parameter related to an estimated traffic rate of the SDUs, and to determine the predetermined frame size 221, 321 according to the first parameter.

Traffic rate (or data rate) of the SDUs may be estimated for example based on historical traffic rate values, instantaneous traffic rate, moving average traffic rate, etc. Various approaches to the knowledge of a skilled person may be applied. For simplicity, the approaches for estimating traffic rate of SDUs will not be explained here. The first parameter may indicate the estimated traffic rate of the SDUs, and may be used to determine the predetermined frame size 221, 321.

Hardware and/or software may be used to determine the predetermined frame size 221, 321. Considering the difference in processing capability, hardware may be capable of determining the predetermined frame size 221, 321 on a per frame basis, so that the predetermined frame size 221, 321 may vary from frame to frame for example, based on the estimated traffic rate of the SDUs. While software may be able to change the predetermined frame size 221, 321 on certain time period, for example once per minute.

The predetermined frame size 221, 321 may be determined for example by software based on a downsizing factor and the length of the appendix data 250, 350. For example, the predetermined frame size 221, 321 may be determined as actual compliant frame size 225, 325 divided by the downsizing factor and rounded up such that the difference between the length 224, 323 of the second bitstream 214, 313 and PON layer size 225, 325 can be filled with an integer number of the appendix data 250, 350.

In another embodiment, the first parameter may indicate a range of the estimated traffic rate of SDUs. For example, the estimated traffic rate may be classified into 4 different levels, with each level representing a range of the estimated traffic rate respectively. For example, the 4 levels may respectively correspond to estimated traffic rate range of less than 12,5%, from 12.5% to 25%, from 25% to 50% and from 50% to 75% of the PON capacity.

The apparatus 200, 300 may be further configured to determine the downsizing factor based on the first parameter. For example, in case the downstream traffic is around 33% of the PON capacity, the apparatus 200, 300, may determine it is safe to apply a downsizing factor of 2, that means the predetermined frame size 221, 321 is half of the actual compliant frame size. In another example, the downsizing factor may be determined by looking up a table, or by applying a downsizing linear function based on estimated PON capacity, etc.

Before setting a lower frame size, a traffic shaper may limit downstream traffic to a value that resembles the new PON capacity. That will cause any potential packet drop to be Quality of Service aware.

An embedded application or a controller application, shall be able to predict PON downstream trends, that would allow to safely reduce the PON capacity. Alternatively, operators may trigger downsizing the frame size manually based on certain criteria (e.g. historical valley hours).

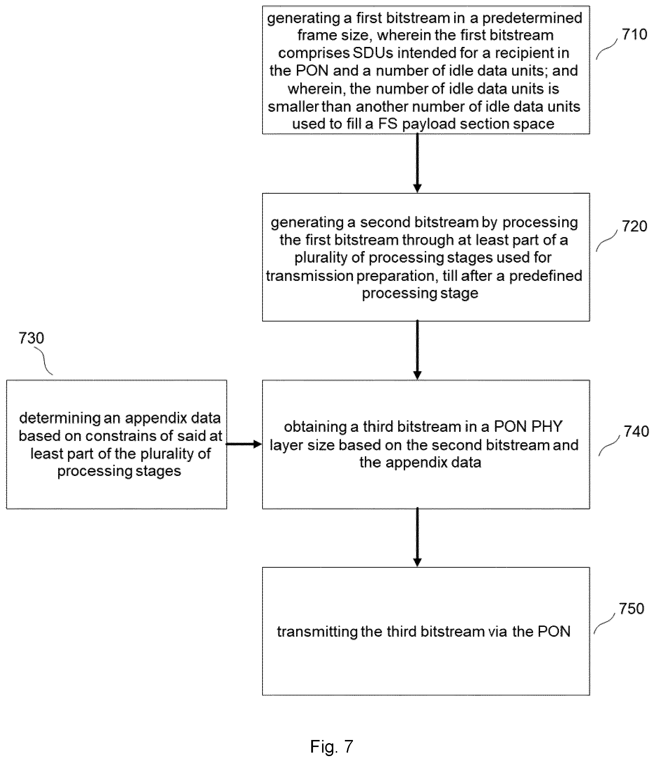

Figure 7 illustrates an example method 700 incorporating aspects of the previously disclosed embodiments.

The method starts with generating 710 a first bitstream (211, 311) in a predetermined frame size (221, 321), wherein the first bitstream (211, 311) comprises service data units, SDUs, (231P, 331P) intended for a recipient in the PON and a number of idle data units (231i, 331i); and wherein, the number of idle data units is smaller than another number of idle data units used to fill a Framing Sublayer, FS, payload section space.

The method continues with generating 720 a second bitstream (214, 313) by processing the first bitstream (211, 311) through at least part of a plurality of processing stages (202, 203, 204; 302, 303, 304) used for transmission preparation, till after a predefined processing stage (204, 303).

The method comprises a parallel step of determining 730 an appendix data (250, 350) based on constrains of said at least part (202, 203, 204; 302, 303) of the plurality of processing stages.

The method further continues obtaining 740 a third bitstream (215, 315) in a PON Physical, PHY, layer size (225, 325) based on the second bitstream (214, 313) and the appendix data

The method ends with transmitting 750 the third bitstream (215, 315) via the PON

A skilled person shall understand that the sequence of the method is not limited to the illustrated example. The method may be implemented in other sequence. For example, the appendix data can be determined before generating the second bitstream or even before generating the first bitstream.

Without in any way limiting the scope, interpretation, or application of the claims appearing below, a technical effect of one or more of the example embodiments disclosed herein is that the frame size is reduced, so the PON MAC processes smaller frames through most of their stages (thus, less dynamic power consumption). Before transmission, the appendix data is determined and used to obtain a frame size suitable for transmission in a PON, so as to be compliant with the standard. Thereby PON MAC power consumption can be reduced for example based on downstream/upstream traffic levels.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. An apparatus (200, 300) for use in a transmitter in a passive optical network, PON, comprising means for:
- generating a first bitstream (211, 311) in a predetermined frame size (221, 321), wherein the first bitstream (211, 311) comprises service data units, SDUs, (231P, 331P) intended for a recipient in the PON and a number of idle data units (231i, 331i); and wherein, the number of idle data units is smaller than another number of idle data units used to fill a Framing Sublayer, FS, payload section space;
- generating a second bitstream (214, 313) by processing the first bitstream (211, 311) through at least part of a plurality of processing stages (202, 203, 204; 302, 303, 304) used for transmission preparation, till after a predefined processing stage (204, 303);
- determining an appendix data (250, 350) based on constrains of said at least part (202, 203, 204; 302, 303) of the plurality of processing stages;
- obtaining a third bitstream (215, 315) in a PON Physical, PHY, layer size (225, 325) based on the second bitstream (214, 313) and the appendix data (250, 350), and
- transmitting the third bitstream (215, 315) via the PON.

2. The apparatus (200) according to claim 1, wherein the means are further configured for:
- obtaining a first parameter related to an estimated traffic rate of the SDUs,
- determining the predetermined frame size (221, 321) according to the first parameter.

3. The apparatus (200, 300) according to any preceding claim, wherein the means are further configured for:
- - determining the appendix data (250, 350) by processing a predetermined number of idle data units through said at least part (202, 203, 204; 302, 303) of the plurality of processing stages.

4. The apparatus (200, 300) according to any preceding claim, wherein the means are further configured for:
- determining the length of the appendix data (250, 350) based on the predefined processing stage (204, 303).

5. The apparatus (200) according to any preceding claim, wherein the predefined processing stage (204) is the latest stage among the plurality of processing stages (202, 203, 204) used for transmission preparation.

6. The apparatus (200) according to the preceding claim, wherein the means are further configured for:
- obtaining the third bitstream (215) by appending the appendix data (250) to the second bitstream (214).

7. The apparatus (300) according to claim any of claims 1-4, wherein the predefined processing stage (303) is before the latest stage (304) among the plurality of processing stages (302, 303, 304), and wherein, the means are further configured for:
- obtaining an intermediate bitstream (314) by appending the appendix data (350) an integer number times to the second bitstream (313); and
- obtaining the third bitstream (315) by processing the intermediate bitstream (314) through the remaining stage(s) (304) of the plurality of processing stages (302, 303, 304).

8. The apparatus (200, 300) according to the preceding claim, wherein said integer number is not smaller than 2.

9. The apparatus (200, 300) according to any of claims 7-8, wherein the length of the appendix data (350) is another integer times of a length of a Forward Error correction, FEC, codeword.

10. The apparatus (200, 300) according to any preceding claim, wherein the means are further configured for:
- determining the predetermined frame size (221, 321) based on a downsizing factor and the length of the appendix data (250, 350).

11. The apparatus (200, 300) according to claims 2 and 10, wherein, the first parameter indicates a range of the estimated traffic rate of SDUs, wherein the means are further configured for:
- determining the downsizing factor based on the first parameter.

12. The apparatus (200, 300) according to any preceding claim, wherein the apparatus is implemented in an Optical Line Terminal, OLT, and the PON PHY layer size (225, 325) is a PON PHY frame size.

13. The apparatus (200, 300) according to any of claims 1-12, wherein the apparatus is implemented in an Optical Network Unit, ONU and the PON PHY layer size (225, 325) is a PON PHY burst size.

14. A method, comprising:
- generating a first bitstream (211, 311) in a predetermined frame size (221, 321), wherein the first bitstream (211, 311) comprises service data units, SDUs, (231P, 331P) intended for a recipient in the PON and a number of idle data units (231i, 331i); and wherein, the number of idle data units is smaller than another number of idle data units used to fill a Framing Sublayer, FS, payload section space;
- generating a second bitstream (214, 313) by processing the first bitstream (211, 311) through at least part of a plurality of processing stages (202, 203, 204; 302, 303, 304) used for transmission preparation, till after a predefined processing stage (204, 303);
- determining an appendix data (250, 350) based on constrains of said at least part (202, 203, 204; 302, 303) of the plurality of processing stages;
- obtaining a third bitstream (215, 315) in a PON Physical, PHY, layer size (225, 325) based on the second bitstream (214, 313) and the appendix data (250, 350), and
- transmitting the third bitstream (215, 315) via the PON.

15. A computer program comprising instructions for causing an apparatus to perform at least the following:
- generating a first bitstream (211, 311) in a predetermined frame size (221, 321), wherein the first bitstream (211, 311) comprises service data units, SDUs, (231P, 331P) intended for a recipient in the PON and a number of idle data units (231i, 331i); and wherein, the number of idle data units is smaller than another number of idle data units used to fill a Framing Sublayer, FS, payload section space;
- generating a second bitstream (214, 313) by processing the first bitstream (211, 311) through at least part of a plurality of processing stages (202, 203, 204; 302, 303, 304) used for transmission preparation, till after a predefined processing stage (204, 303);
- determining an appendix data (250, 350) based on constrains of said at least part (202, 203, 204; 302, 303) of the plurality of processing stages;
- obtaining a third bitstream (215, 315) in a PON Physical, PHY, layer size (225, 325) based on the second bitstream (214, 313) and the appendix data (250, 350), and
- transmitting the third bitstream (215, 315) via the PON.
